# EUROPÄISCHE PATENTSCHRIFT

(11) **EP 3 815 750 B1**
(45) Veröffentlichungstag und Bekanntmachung des Hinweises auf die Patenterteilung: **11.05.2022**
(21) Anmeldenummer: 19206880.7
(22) Anmeldetag: 04.11.2019
(51) Int. Cl.: A62B 23/02, A41D 13/11, B01D 39/08, A62B 9/00

(54) **ATEMSCHUTZMASKE UND VERFAHREN ZUR BESCHICHTUNG EINES FILTERMEDIUMS**
BREATHING MASK AND METHOD FOR COATING A FILTER MEDIUM
MASQUE DE PROTECTION RESPIRATOIRE ET PROCÉDÉ DE REVÊTEMENT D'UN MILIEU FILTRANT

(43) Veröffentlichungstag der Anmeldung: 05.05.2021
(73) Patentinhaber: Korpan, Nikolai N., 1090 Wien (AT); Palant, Volodymyr G., 03049 Kyiv (UA)
(72) Erfinder: Korpan, Nikolai N., 1090 Wien (AT); Palant, Volodymyr G., 03049 Kyiv (UA)
(74) Vertreter: Patentanwaltskanzlei Matschnig & Forsthuber OG

(56) Entgegenhaltungen:
- WO-A1-2011/026515
- WO-A1-2014/210554
- KR-A- 20150 124 351
- KR-A- 20160 098 125

## Beschreibung

Die Erfindung betrifft eine neuartige Atemschutzmaske. Weiters wird im Rahmen der Erfindung ein Verfahren zum Beschichten eines Filtermediums einer Atemschutzmaske angegeben.

Aus dem Stand der Technik sind bereits zahlreiche Varianten von Atemschutzmasken in Form von Mund-Nasen-Schutz-Masken oder sogenannten Atemschutzhalbmasken bekannt. Atemschutzhalbmasken umschließen in aufgesetzter Lage den Mund und die Nase einer Person. Die Augenpartie bleibt bei Atemschutzhalbmasken - im Gegensatz zu Vollmasken - ausgespart, so dass diese nicht ohne weiteres in einer Umgebungsatmosphäre mit Schadstoffen, die eine Reizung oder Schädigung der Augen enthält, verwendet werden können. Im Gegensatz zur Vollmaske verläuft bei einer Atemschutzhalbmaske die Dichtlinie über die Nasenpartie, die nur schwer abzudichten ist. Atemschutzhalbmasken werden üblicherweise als Einweg-Artikel verwendet.

Partikelfiltrierende Halbmasken bestehen in der Regel vollständig aus dem jeweiligen Filtermaterial und werden beispielsweise auf Baustellen oder im Bergbau eingesetzt. Solche Atemschutzhalbmasken werden im Englischen auch als filtering face piece (abgekürzt: FFP) bzw. als Feinstaubmaske, Staubmaske oder als Atemschutzfilter bezeichnet und können je nach Ausführung vor dem Einatmen von Aerosolen und Partikeln schützen. Filtrierende Halbmasken bestehen meist aus Vliesstoff, der mittels Gummibändern in an sich bekannter Weise an den Ohren oder am Hinterkopf einer Person befestigt werden kann. Ein formbarer Nasenbügel, beispielsweise mit einer Metalleinlage, erlaubt es dabei, dass die Atemschutzmaske an die individuellen Gesichtskonturen des jeweiligen Trägers angepasst werden kann und somit auch während längeren Tragens nicht stört.

Atemschutzmasken mit Prüfzertifizierung schützen bei sachgerechter Anwendung zuverlässig vor lungengängigen Stäuben und Flüssigkeitsnebeln innerhalb ihres jeweiligen Anwendungsbereichs. Sie besitzen zusätzlich zum stützenden Filtermaterial Lagen aus einem elektrostatischen Material (Elektret). Hierbei werden kleine Staubpartikel und Flüssigkeitstropfen durch elektrostatische Kräfte gebunden. Allerdings geht die elektrostatische Wirkung durch Staubanlagerung nach einiger Zeit zurück, so dass es zu einer merklichen Steigerung des Atemwiderstandes kommt. Sofern nicht vom Hersteller anders angegeben sind sie daher grundsätzlich für einmalige Nutzung für einen Arbeitstag von maximal acht Stunden vorgesehen. Je nach Leckage-Menge werden solche Halbmasken in die Schutzklassen FFP-1, FFP-2 oder FFP-3 gereiht. Halbmasken der Klasse FFP-2 bieten dabei eine Schutzwirkung für mindestens 95% der gesundheitsschädlichen Stoffe, deren Konzentration bis zum 10-fachen der maximalen Arbeitsplatz-Konzentration reicht.

Halbmasken der Klasse FFP-3 bieten dabei eine Schutzwirkung für mindestens 99% der gesundheitsschädlichen Stoffe, deren Konzentration bis zum 30-fachen der maximalen Arbeitsplatz-Konzentration reicht.

Weiters hat sich der Einsatz von Atemschutzhalbmasken in der Medizin zur Behandlung, Pflege oder Untersuchung von Patienten bewährt. Hierzu werden sogenannte Mund-Nasen-Schutz-Masken (Abkürzung: MNS, auch kurz als "Mundschutz" bezeichnet) eingesetzt, die die Übertragung von Krankheitserregern durch Sekret-Tröpfchen verhindern sollen. Es handelt sich dabei meist um Gesichts-Halbmasken, die aus mehreren Papier- und/oder Vliesschichten aufgebaut sind und die mit Binde- oder Gummibändern am Hinterkopf oder hinter den Ohren einer Person fixiert werden. Mit einem integrierten flexiblen Metallbügel in der Mitte des oberen Randes wird die Atemschutzhalbmaske an den Nasenrücken gedrückt, um das Gesichtsfeld frei zu halten und den Atemluftaustritt nach oben einzuschränken. Nach einmaliger Benutzung wird die Atemschutzhalbmaske entsorgt.

Im Weiteren bezieht sich der hier verwendete Begriff der Atemschutzmaske somit gleichermaßen auf die zuvor genannten Varianten von Mund-Nasen-Schutz-Masken, filtrierende Halbmasken sowie von geprüften Halbmasken mit Prüfzertifizierung, die in eine der vorstehend genannten Schutzklassen eingereiht sind.

Aus dem Dokument DE 29 38 720 A ist eine herkömmliche Gesichtshalbmaske bekannt geworden, die für den Einmalgebrauch gedacht ist. Als Filtermaterial dienen gefaltete Kunststoffasern, wobei das Filtermaterial eine Form aufweist, die einen Sitz über der Nase, den Wangen und dem Kinn des Benutzers sichert und das mit einem einwärtsgerichteten, als Dichtlippe ausgebildeten Dichtstreifen aus dem gleichen Material sowie Kopfbändern, die am Rand des Filtermaterials angeordnet sind, am Hinterkopf des Trägers befestigt werden.

Eine weitere Gesichtsmaske für den einmaligen Gebrauch ist aus der EP 0 051 616 A bekannt. Die Gesichtsmaske weist ein Hauptteil auf, welches die Nase und den Mund des Benutzers bedecken soll. Der Hauptteil der Gesichtsmaske ist dabei als Filtermedium ausgebildet und besteht aus einer Bahn mit einem Gehalt an fibrillierten Elektret-Fasern, wobei diese Bahn ein Gewicht von 6 bis 50 g/m² aufweist, sowie die genannten Fasern eine durchschnittliche Weite von mindestens 10 Mikrometer aufweisen.

Weiters beschreibt die EP 0 355 444 A2 eine Gesichtsmaske, die aus einem Maskenzuschnitt mit seitlich angebrachten Befestigungsbändern besteht, wobei der Maskenzuschnitt der Gesichtsmaske innenseitig und an seinem oberen Rand einen glatten oder quer zur Längsrichtung angeordneten Schaumstoffstreifen mit einer Klebefläche aufweist. Die Klebeschicht ist mittels eines abziehbaren Schutzblattes abgedeckt, so dass der am oberen Rand des Maskenzuschnittes der Gesichtsmaske angeordnete Schaumstoffstreifen gesichtsseitig zugewandt oberhalb der Nasen- und der Wangenpartie sowie unterhalb der Augen des Benutzers geklebt wird, wodurch ein Mund- und Nasenschutz gewährleistet ist und die feuchte Atemluft nicht am Oberrand der Maske entweichen kann. Die Gefahr, dass optische Brillen oder Schutzbrillen beim Tragen der Atemschutzmaske beschlagen, wird dadurch gemindert.

Nachteilig ist bei vielen derzeit bekannten Atemschutzmasken, dass diese mit Filtermaterialien ausgerüstet sind, die entweder selbst oder aufgrund spezieller Beschichtungsmittel, beispielsweise antimikrobieller Beschichtungsmittel, gesundheitsgefährdend sein können. So ist es beispielsweise bekannt, Polyacrylonitrile als Filtermaterialien für solche Masken zu verwenden. Dies ist jedoch nach Kenntnisstand der Erfinder aus medizinischen Gründen bedenklich, da derartige Filtermaterialien beim Einsatz als Gesichtsmasken Unverträglichkeitszustände, lokale und systemische Intoleranzen, Allergien sowie Entzündungen der Mund- und Nasenschleimhäute beim Benutzer solcher Masken auslösen sowie bei längerem Kontakt auch Krebserkrankungen verursachen können (Robert A. Weinberg: The biology of cancer; 2. Auflage; Verlag Garland Science, New York, 2014; ISBN: 978-0-8153-4220-5)

Weitere Lösungen sind aus KR 2016 0098125 A, WO 2011/026515 A1 und KR 2015 012435 A bekannt, die Masken mit einer mit Salz beschichteten Filterschicht offenbaren. Jede dieser Lösungen weist jedoch einige Mängel auf, die verringern entweder die Beständigkeit aufgrund der Reibung zwischen den Schichten womit die Salzschicht beschädigt wird und/oder die Wirksamkeit weil nur eine einzige Filterschicht mit Salz bedeckt ist.

Der vorliegenden Erfindung liegt die Aufgabe zugrunde, eine verbesserte Atemschutzmaske der eingangs genannten Art bereitzustellen, mit der während des Tragens ein wohltuender, gesundheitsfördernder Effekt für den Benutzer erzielt wird und die auch für Allergiker sehr gut verträglich ist und zudem eine verbesserte Beständigkeit und Wirksamkeit aufweist. Die Erfindung stellt sich als weitere Aufgabe, eine verbesserte Atemschutzmaske bereitzustellen, bei der das Durchdringen von Feuchtigkeit während des Tragens der Maske verringert wird.

Diese Aufgaben werden bei einer Atemschutzmaske gemäß dem Oberbegriff des Anspruchs 1 mit den Merkmalen des kennzeichnenden Teiles des Anspruchs 1 gelöst. Die Unteransprüche betreffen weitere besonders vorteilhafte Ausgestaltungen der Erfindung. Generell wird im Weiteren die Zuordnung der Begriffe hinsichtlich eines Ortes oder einer Orientierung, wie beispielsweise "horizontal", "vertikal", "in horizontaler Richtung", "in vertikaler Richtung", "oben", "unten", "vorne", "hinten", "darunter", "darüber" etc. lediglich zur Vereinfachung gewählt und diese Begriffe beziehen sich möglicherweise auf die Darstellung in den Zeichnungen, nicht jedoch notwendigerweise auf eine aktuelle Gebrauchslage oder Trageposition einer Atemschutzmaske. Weiters beziehen sich die im Folgenden verwendeten Begriffe "Träger", "Benutzer" oder "Person" jeweils auf den Nutzer der Atemschutzmaske. Diese Begriffe sind geschlechtsneutral zu verstehen und betreffen gleichermaßen Vertreter beider Geschlechter.

Erfindungsgemäß umfasst eine Atemschutzmaske, die zum Bedecken von Mund und Nase einer Person geeignet ist, die Merkmale des Anspruchs 1.

In bisher noch nicht veröffentlichten Voruntersuchungen konnte von den Erfindern überraschenderweise festgestellt werden, dass mit einer Salzschicht beschichtete Filterschichten im Vergleich zu herkömmlichen Filterschichten eine deutlich verbesserte Filterwirkung für gasförmige Verbrennungsprodukte aufweisen. Mittels der untersuchten mit Salzschichten beschichteten Filtermedien konnte in Tierversuchen bei Exposition der Versuchstiere mit toxischen Verbrennungsgasen die Letalität der Versuchstiere signifikant reduziert werden.

Erfindungsgemäß sind bei einer Atemschutzmaske zwei oder mehrere Filterschichten eines Filtermediums zwischen der äußeren und der inneren Abdecklage angeordnet, wobei jede der zwei oder mehreren Filterschichten zumindest abschnittsweise mit einer Salzschicht beschichtet ist, wobei die zwei oder mehreren Filterschichten zumindest abschnittsweise miteinander verbunden sind. Beispielsweise können die Filterschichten miteinander vernäht oder verklebt sein, um solcherart ein gegenseitiges Verschieben der einzelnen Filterschichten zu vermeiden. In dieser erfindungsgemäßen Atemschutzmaske wird das unbeabsichtigte Abreiben der

Salzbeschichtung wesentlich reduziert und die Salzschichten bleiben auch während des Transports und der Lagerung der Atemschutzmaske weitestgehend auf den Filterschichten bestehen.

Besonders zweckmäßig kann es sein, wenn bei einer erfindungsgemäßen Atemschutzmaske zwei oder mehrere Filterschichten aus unterschiedlichen Filtermedien hergestellt sind.

Als Trägermaterialien, die die mit Salz beschichteten Filterschichten bilden, können beispielsweise Textilmaterialien aus Leinen oder Baumwolle, Mull, und/oder Vliesstoff eingesetzt werden.

Besonders vorteilhaft kann es sein, wenn bei einer Atemschutzmaske gemäß der Erfindung das anorganische Salz, welches die Salzschicht bildet, ein Natriumsalz enthält. Zweckmäßig wird zur Beschichtung beispielsweise eine Kochsalzlösung verwendet. Die Salzschicht gemäß der Erfindung kann somit auch nur aus einem einzigen anorganischen Salz, vorzugsweise einem Natriumsalz, besonders bevorzugt aus Kochsalz, bestehen.

In einer Weiterbildung der Erfindung kann bei einer Atemschutzmaske die Salzschicht zumindest ein weiteres Salz enthalten, das ausgewählt ist aus der Gruppe bestehend aus: Kaliumsalz, Calciumsalz, Magnesiumsalz, Mangansalz. Im Rahmen der Erfindung können neben Kochsalz auch noch andere Salze oder Salzmischungen eingesetzt werden. Beispielsweise kann auch Meersalz zum Beschichten der Salzschichten auf den Filtermaterialien verwendet werden. Die Salzblume von Meersalz besteht beispielhaft im Mittel aus über 97 % Natriumchlorid, 0,5 % Calciumsulfat, 0,3 % Magnesiumchlorid, 0,2 % Magnesiumsulfat ("Bittersalz") und etwa 0,1 % Kaliumchlorid, der Rest ist verbliebenes Wasser.

Zweckmäßig kann bei einer erfindungsgemäßen Atemschutzmaske die auf der zumindest einen Filterschicht aufgebrachte Salzschicht eine Schichtdicke von 0,5 µm bis 10 µm, vorzugsweise von 1 µm bis 5 µm, aufweisen. In Vorversuchen hat sich gezeigt, dass bereits diese vergleichsweise dünnen Salzschichten eine vorteilhafte Wirkung auf das Absorptionsverhalten der beschichteten Filterschichten haben und das Rückhaltevermögen der Atemschutzmaske gegen gesundheitsschädliche Stoffe in der Atemluft deutlich verbessert wird.

Besonders effektiv kann die Beschichtung der erfindungsgemäßen Atemschutzmaske sein, wenn die zumindest eine Filterschicht mit einer Salzschicht mit einer Flächenbeladung von 10 g bis 300 g/m² Filtermedium, vorzugsweise von 50 g bis 250 g/m² Filtermedium, besonders bevorzugt von 100 g bis 200 g/m² Filtermedium, beschichtet ist. Je gleichmäßiger die Salzschicht über die gesamte Filterfläche verteilt ist bzw. je konstanter die Flächenbeladung der Salzschicht über die Filterfläche ist, umso höher ist das Rückhaltevermögen der Atemschutzmaske gegen gesundheitsschädliche Stoffe.

In einer Weiterbildung der Erfindung kann eine Atemschutzmaske zumindest eine Salzsolekapsel umfassen, wobei die zumindest eine Salzsolekapsel eine wässrige Kochsalzlösung enthält, die von einer Kapselhülle umgeben ist, wobei die zumindest eine Salzsolekapsel an der zumindest einen Filterschicht zwischen der äußeren Abdecklage und der inneren Abdecklage befestigt ist.

In den Voruntersuchungen der Erfinder hat sich überraschend gezeigt, dass durch Befeuchten der Salzschichten auf der zumindest eine Filterschicht die Filterwirkung der Atemschutzmaske weiter verbessert werden kann. Eine oder mehrere Salzsolekapseln, die in der Atemschutzmaske integriert sind und die durch einfaches Zusammendrücken geöffnet werden können, um sodann die darin befindliche Salzsole freizusetzen, sind eine besondere komfortable Variante, um die erfindungsgemäße Atemschutzmaske vor oder während des Tragens befeuchten zu können.

Unter dem Begriff "Salzsole" versteht man eine wässrige Lösung von Salzen, die mindestens 14 g gelöster Stoffe pro 1 kg Wasser enthält. Die Bezeichnung Salzsole wird heute hauptsächlich für entsprechend konzentrierte Natriumchlorid-Lösungen verwendet. Alternativ oder in Ergänzung dazu ist es möglich, die Atemschutzmaske mit einer oder mehreren Zugangsöffnungen auszustatten, um beispielsweise vom seitlichen Rand ins Innere der Filterschichten zu gelangen. Damit wird es möglich, die innenliegenden Salzschichten der Atemschutzmaske durch die zumindest eine Zugangsöffnung hindurch mit Wasser oder mit einer Salzlösung zu besprühen und solcherart für eine weiter verbesserte Absorptionswirkung der Atemschutzmaske zu sorgen. Je nach Ausführung kann die Zugangsöffnung beispielsweise wiederverschließbar ausgeführt sein. Beispielsweise kann dazu ein Klettverschluss im Bereich der Zugangsöffnung vorgesehen sein, der ein einfaches Öffnen und Wiederverschließen der Zugangsöffnung nach dem Einbringen von Feuchte ermöglicht.

In einer weiteren vorteilhaften Ausführung der Erfindung können bei einer Atemschutzmaske zwei oder mehrere Salzsolekapseln zwischen der äußeren Abdecklage und der inneren Abdecklage innerhalb der Atemschutzmaske angeordnet sein, wobei vorzugsweise die zwei oder mehreren Salzsolekapseln über den Maskenzuschnitt verteilt angeordnet sind. In dieser Variante ist ein gleichmäßiger und größerer Salzsoleeintrag in die Atemschutzmaske möglich.

Besonders zweckmäßig kann es sein, wenn bei der erfindungsgemäßen Atemschutzmaske die zumindest eine Salzsolekapsel von 0,1 ml bis 10 ml einer wässrigen Kochsalzlösung enthält.

Um eine einfache Handhabung der erfindungsgemäßen Atemschutzmaske zu gewährleisten, kann es vorteilhaft sein, wenn die Kapselhülle der zumindest einen Salzsolekapsel durch äußere Krafteinwirkung öffenbar ist, wobei die Kapselhülle vorzugsweise aus Gelatine oder einem Gelatine-enthaltenden Material hergestellt ist. Zur Herstellung der Kapselhülle können neben Gelatine auch andere gesundheitsfreundliche Materialien verwendet werden. Die eingangs genannten Aufgaben werden auch mit einem erfindungsgemäßen Verfahren zum Beschichten eines Filtermediums einer Atemschutzmaske mit einer Salzschicht gemäß Anspruch 12 gelöst.

Zweckmäßig kann bei einem erfindungsgemäßen Verfahren als Salzlösung eine Kochsalzlösung mit einer Salzkonzentration von 0,9% bis 35,9% verwendet werden.

Beispielsweise können eine isotonische Kochsalzlösung, oder eine zum Blutplasma isoosmotische Lösung aus Kochsalz (Natriumchlorid) in injektionsgeeignetem Wasser zur Beschichtung des Filtermediums verwendet werden.

In einer bevorzugten Ausführungsvariante kann bei einem erfindungsgemäßen Verfahren die Salzschicht mittels Imprägnierung des Filtermediums mit der Salzlösung aufgebracht werden, wobei die Filterschicht zumindest einmal, vorzugsweise mehrmals, in der Salzlösung eingetaucht wird.

Zweckmäßig können anschließend zwei oder mehrere Filterschichten beispielsweise durch Vernähen miteinander verbunden werden, wodurch ein Monoprodukt in Form einer Salzschutzmaske entsteht, bei der die mit Salz beschichteten Filterschichten vorteilhaft nicht aneinander reiben. Gegebenenfalls können auch die äußeren Abdecklagen mit den Filterschichten beispielsweise durch Vernähen oder mittels eines Klebeverfahrens miteinander verbunden werden.

Beispielsweise können zur Herstellung der Atemschutzmaske eine bis fünf Filterschichten, vorzugsweise drei Filterschichten, die aus einem Gaze (Mull) - Material in einer beispielhaften Größe von 175 x 95 mm angefertigt sind, in einer 35,9%-Salzlösung getränkt, danach fixiert und anschließend getrocknet werden. Alternativ oder in Ergänzung zum Gaze- bzw. Mull-Material können auch andere Materialien wie beispielsweise Textilstoffe aus 95% Wolle und 5% Elastan in derselben Größe gleichmäßig ausgedehnt und in 35,9%-Salzlösung getränkt, danach fixiert und anschließend getrocknet gelassen werden. Die mit Salz beschichteten und getrockneten Filterschichten werden anschließend gleichmäßig zusammengefaltet.

Im Falle einer mehrfachen Imprägnierung kann die erste Expositionszeit der Filterschichten in der Salzlösung beispielsweise von 1 bis 3 Minuten betragen, wobei die erste Expositionszeit für das jeweils verwendete Filtermaterial möglichst adaptiert ist.

Beispielsweise kann es für den Einsatz von Gaze (Mull) als Filtermaterial ausreichen, wenn das Filtermaterial eine Minute lang in der Salzlösung imprägniert wird. Für andere Textilstoffe kann es hingegen erforderlich sein, dass deren Expositionszeit für eine sichere, gleichmäßige und vollständige Imprägnierung des Textilgewebes mit der Salzlösung beispielsweise auf 3 Minuten erhöht wird. Mit einem gewissen Zeitabstand, beispielsweise von 1 Stunde bis 14 Stunden, kann erforderlichenfalls die Salzschichtenimprägnierung in gleicher Weise mehrere Male, beispielsweise 2 bis 7 Mal wiederholt werden. Jede Wiederholung der Imprägnierungssitzungen kann dabei mit derselben oder aber mit einer erhöhten, verlängerten Expositionszeit erfolgen. Ebenso ist es im Rahmen des erfindungsgemäßen Beschichtungsverfahrens vorgesehen, dass die Expositionszeiten mit der steigenden Anzahl an Wiederholungen der Imprägnierung ebenfalls ansteigen. In Vorversuchen wurde beispielsweise die Imprägnierung des Filtermaterials mit Salz 5 bis 7 Mal mit steigenden Expositionszeiten von 1 Minute bis 17 Minuten für Gaze (Mull) Materialien sowie mit Expositionszeiten von 3 Minuten bis 33 Minuten für die Salzbeschichtung von textilen Filtergeweben untersucht.

In einer weiteren, alternativen Ausführungsvariante kann bei einem erfindungsgemäßen Verfahren die Salzschicht mittels Aufsprühen der Salzlösung auf das Filtermedium aufgebracht werden.

Der Verfahrensablauf der Herstellung der Sprühbeschichtung ist dabei vergleichbar mit dem zuvor beschriebenen Imprägnierungsverfahren. Im Fall des Aufsprühens von Salzlösung werden die Filterschichten entsprechend mit Salzlösung besprüht, danach fixiert und anschließend getrocknet.

Zusätzlich kann es zweckmäßig sein, wenn eine fertige Atemschutzmaske direkt vor dem Tragen noch mit einer weiteren Gabe an aufgesprühter, externer Salzlösung befeuchtet wird, um die wohltuende und gesundheitsfördernde Wirkung der Salzbeschichtung innerhalb der Atemschutzmaske weiter zu erhöhen. Dazu kann die Atemschutzmaske eine oder auch mehrere Zugangsöffnungen aufweisen, die beispielsweise im Bereich der Seitenkanten der Atemschutzmaske angeordnet sind. Besonders bevorzugt kann sein, diese eine oder mehrere Zugangsöffnungen an der beim Tragen innenliegenden Innenseite der Atemschutzmaske anzuordnen, damit besonders die zur Innenseite der Maske hin orientierte Salzschicht durch einen oder mehrere Sprühstöße mit Salzlösung befeuchtet werden können. Somit kann also der Innenraum zwischen der inneren Abdecklage und der zumindest einen mit Salz beschichteten Filterschicht an der zum Mund bzw. zur Nase des Trägers hin orientierten Innenseite der Atemschutzmaske gleichmäßig besprüht und angefeuchtet werden. Danach wird die Zugangsöffnung, die vergleichbar mit einem "Fenster" das Innere der Atemschutzmaske freigibt, wieder verschlossen. Beispielhaft kann dazu ein Klettverschluss angeordnet sein. Anschließend ist die Atemschutzmaske sofort einsatzbereit.

Weitere Einzelheiten, Merkmale und Vorteile der Erfindung ergeben sich aus der nachfolgenden Erläuterung von in den Zeichnungen schematisch dargestellten Ausführungsbeispielen. In den Zeichnungen zeigen:
- **Fig. 1** in einer Vorderansicht eine Außenseite einer Atemschutzmaske gemäß einer ersten Ausführungsform der Erfindung;
- **Fig. 2** in einer Schrägansicht eine Innenseite der in Fig. 1 dargestellten Atemschutzmaske;
- **Fig. 3** eine Schnittansicht von der Seite durch die mehreren Filterschichten der in den Figuren 1 und 2 veranschaulichten Atemschutzmaske;
- **Fig. 4** in einer Vorderansicht eine Atemschutzmaske gemäß einer zweiten Ausführungsform der Erfindung;
- **Fig. 5** in einer Vorderansicht eine dritte Ausführungsform einer erfindungsgemäßen Atemschutzmaske;
- **Fig. 6** eine Schnittansicht von der Seite durch die beiden Filterschichten der in den Fig. 5 veranschaulichten Atemschutzmaske.

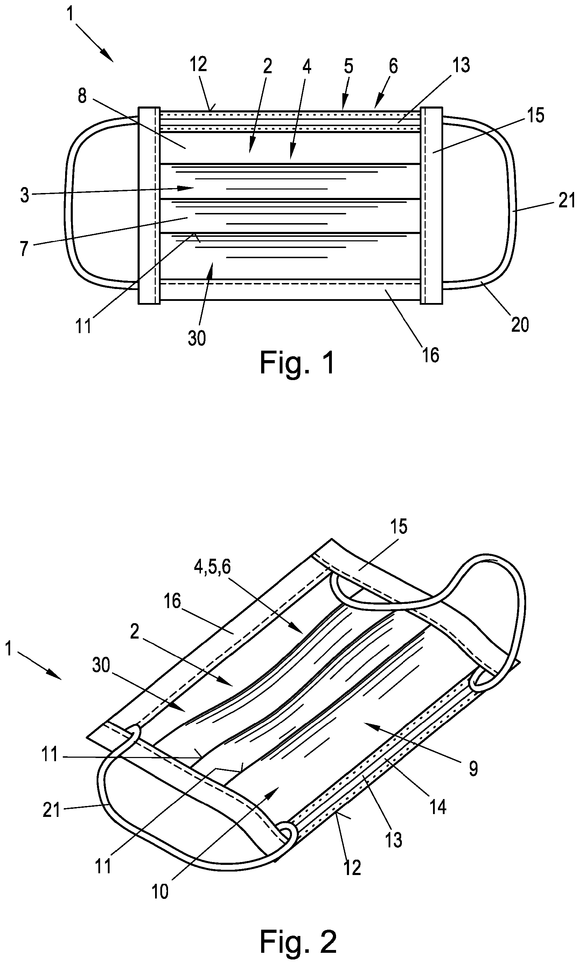

Im Detail werden nun die einzelnen Figuren beschrieben. Die folgende Beschreibung betrifft gleichermaßen die **Figuren 1 bis 3** und die dort gezeigte erste Ausführungsform einer erfindungsgemäßen Atemschutzmaske 1 in Form einer Mund-Nasen-Schutz-Maske. Die Atemschutzmaske 1 weist einen Maskenzuschnitt 2 auf, der hier aus drei Lagen eines Filtermediums 3 angefertigt ist. Eine erste Filterschicht 4, eine zweite Filterschicht 5 sowie eine dritte Filterschicht 6 bilden hier das Innere der Atemschutzmaske 1. Die drei Filterschichten 4, 5, 6 sind dabei durch eine äußere Abdecklage 7, welche beim Tragen der Atemschutzmaske 1 vom Gesicht des Trägers abgewandt ist und eine Außenseite 8 der Atemschutzmaske 1 bildet, sowie durch eine innere Abdecklage 9, die beim Tragen eine Innenseite 10 der Atemschutzmaske 1 bildet, abgedeckt. Die mehreren Lagen, also die äußere Abdecklage 7, die innere Abdecklage 9 sowie die dazwischen angeordneten drei Filterschichten 4, 5, 6 sind hier miteinander gemeinsam gefaltet unter der Bildung von mehreren Maskenfalten 11 angeordnet. In der Trageposition der Atemschutzmaske 1 ist innerhalb des oberen Maskenrands 12 ein Nasenbügel 13 integriert. Der Nasenbügel 13 ist hier als Metalleinlage ausgeführt, die an die individuellen Gesichtskonturen des jeweiligen Trägers angepasst werden kann und somit auch während längeren Tragens nicht stört.

Ein weicher Auflagestreifen 14, der am oberen Maskenrand 12 an der Innenseite 10 der Atemschutzmaske 1 angeordnet ist, verbessert ebenfalls den Tragekomfort im Bereich des Nasenbügels 13.

Die Atemschutzmaske 1 weist an ihren Seiten jeweils einen seitlichen Maskenrand 15 sowie an ihrer Unterseite, die dem oberen Maskenrand 12 gegenüberliegt, einen unteren Maskenrand 16 auf. An sich bekannte Befestigungsmittel 20, beispielsweise elastische Befestigungsbänder 21, dienen hier zum Befestigen der Atemschutzmaske 1 an den Ohren des Trägers.

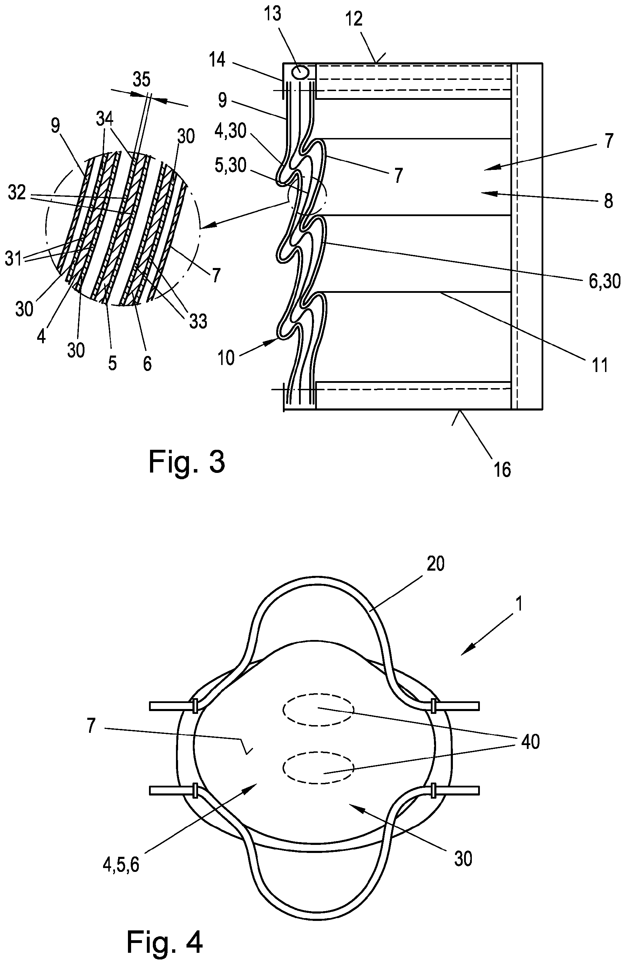

Erfindungsgemäß sind die innenliegenden Filterschichten 4, 5, 6 hier jeweils mit Salzschichten 30 beschichtet. Dies ist der **Fig. 3** und der darin gezeigten vergrößerten Detailansicht zu entnehmen. Die erste Filterschicht 4 ist hier mit einer ersten Salzschicht 31 beschichtet. Die zweite Filterschicht 5 ist mit einer zweiten Salzschicht 32 beschichtet. Die dritte Filterschicht 6 ist mit einer dritten Salzschicht 33 beschichtet. Die Salzschichten 30 bzw. 31, 32, 33 sind hier jeweils aus einem anorganischen Salz 34, beispielsweise Kochsalz, gebildet. Die Salzschichtdicken 35 sind hier jeweils im Wesentlichen gleich groß gewählt und jede der Salzschichten 31, 32, 33 weist hier eine Salzschichtdicke 35 von etwa 5 µm (Mikrometer) auf. Die Salzschichten 31, 32, 33 wurden hier durch Imprägnieren der Filterschichten 4, 5, 6 in einer Kochsalzlösung aufgebracht. Die Salzschichten mit ihren Salzschichtdicken 35 sind daher jeweils beidseitig auf den Filterschichten 4, 5, 6 aufgebracht. Als Filterschichten 4, 5, 6 wird hier beispielsweise ein Gaze- bzw. Mull-Material verwendet.

Alternativ können die Salzschichten 31, 32, 33 der einzelnen Filterschichten 4, 5, 6 auch unterschiedliche Salzschichtdicken 35 aufweisen. Beispielsweise kann es zweckmäßig sein, wenn in einer Ausführung mit beispielsweise drei oder fünf Filterschichten die jeweils mittig angeordnete Filterschicht eine größere Salzschichtdicke und somit eine größere Flächenbeladung an beschichtetem Salz aufweist als die jeweils nach außen hin angeordneten Filterschichten.

**Fig. 4** zeigt in einer Vorderansicht eine Atemschutzmaske 1 gemäß einer zweiten Ausführungsform der Erfindung. Die hier dargestellte Atemschutzmaske 1 in Form einer gemoldeten Gesichtshalbmaske weist an sich denselben Aufbau wie die zuvor anhand der Figuren 1 bis 3 beschriebene erste erfindungsgemäße Ausführungsform auf. Auch bei der in Fig. 4 dargestellten Atemschutzmaske 1 sind beispielsweise drei Filterschichten 4, 5, 6 im Inneren der Atemschutzmaske 1 jeweils mit Salzschichten 30 beschichtet. Ebenso sind die Filterschichten 4, 5, 6 durch eine äußere Abdecklage 7, welche beim Tragen der Atemschutzmaske 1 vom Gesicht des Trägers abgewandt ist und eine Außenseite 8 der Atemschutzmaske 1 bildet, sowie durch eine innere Abdecklage 9, die beim Tragen eine Innenseite 10 der Atemschutzmaske 1 bildet, abgedeckt. Abweichend von der in den Figuren 1 bis 3 gezeigten Ausführung sind hier in Fig. 4 an sich bekannte Befestigungsmittel 20, beispielsweise elastische Befestigungsbänder 21, so angeordnet, dass diese zum Befestigen der Atemschutzmaske 1 im Bereich des Halses bzw. des Hinterkopfs des Trägers dienen. Weiters unterscheidet sich die in Fig. 4 gezeigte Ausführungsform der Atemschutzmaske 1 gegenüber der zuvor besprochenen Variante, als hier zusätzlich zwei Salzsolekapseln 40 zwischen der äußeren Abdecklage 7 und der inneren Abdecklage 9 angeordnet sind, die von außen durch händisches Zusammendrücken geöffnet werden können und dabei eine in Innerem befindliche wässrige Salzlösung 41 freigeben, die zum Befeuchten der innenliegenden Filterschichten 4, 5, 6 dient. Die Salzsolekapseln 40 sind an den Filterschichten angeklebt und somit ortsfest innerhalb der Atemschutzmaske 1 positioniert. Beispielsweise kann deren Position von außen für den Benutzer ersichtlich markiert sein, damit dieser weiß, wo sich die Salzsolekapseln 40 innerhalb der Atemschutzmaske 1 befinden, um durch Zusammendrücken geöffnet werden zu können.

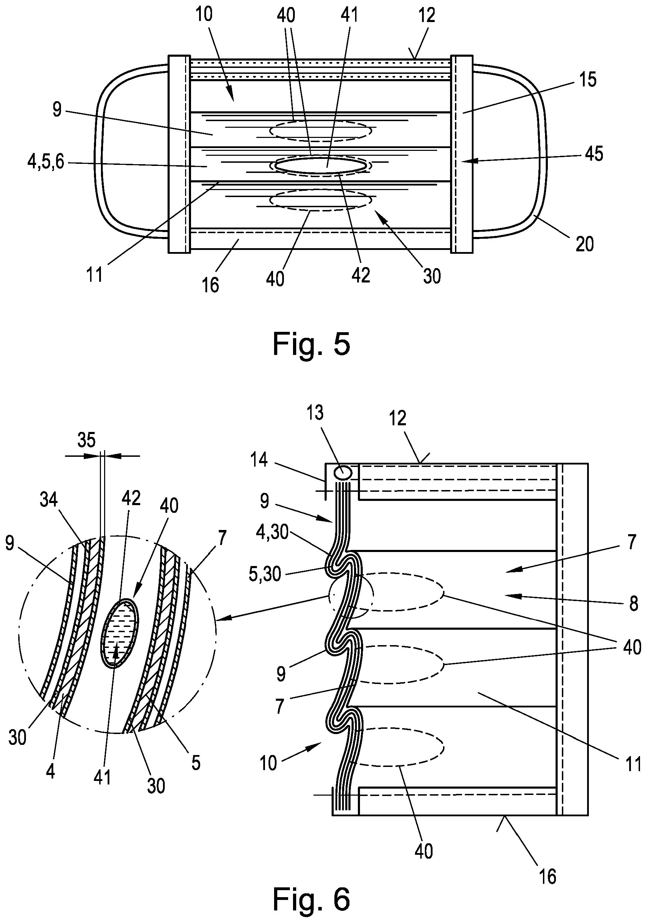

Etwa vergleichbar mit der in Fig. 4 veranschaulichten Ausführung zeigen die **Figuren 5 und 6** eine dritte Ausführungsform einer erfindungsgemäßen Atemschutzmaske 1, bei der ebenfalls Salzsolekapseln 40 im Innenraum der Atemschutzmaske 1 angeordnet sind. In dieser Ausführung ist die Atemschutzmaske 1 aus zwei Filterschichten 4, 5 aufgebaut, die sich im Inneren der Atemschutzmaske 1 befinden und die jeweils mit Salzschichten 30 beschichtet sind. Dies ist der vergrößerten Detailansicht in Fig. 6 zu entnehmen. Die hier gezeigte Atemschutzmaske 1 ist in Form einer Mund-Nasen-Schutz-Maske gestaltet. Mehrere Salzsolekapseln 40 sind hier zwischen der ersten Filterschicht 4 und der zweiten Filterschicht 5 gleichmäßig innerhalb der Atemschutzmaske 1 verteilt angeordnet. Die Salzsolekapseln 40 sind jeweils mit einer wässrigen Salzlösung 41 befüllt. Als Kapselhülle 42 dient jeweils ein Gelatine-enthaltendes Material, welches vom Träger der Maske vor Gebrauch einfach händisch aufgedrückt werden kann. Zusätzlich ist hier an einem seitlichen Maskenrand 15 eine Zugangsöffnung 45 vorgesehen. Diese Zugangsöffnung 45 gibt bei Bedarf den Zugang ins Innere der Atemschutzmaske 1 frei und kann dazu dienen, von außen zusätzliche Salzlösung ins Innere der Atemschutzmaske 1 zu sprühen, um diese vor oder während des Tragens mit weiterer, frischer Salzlösung zu befeuchten und somit die positive Wirkung der Salzbeschichtung innerhalb der Atemschutzmaske 1 weiter zu verbessern.

### LISTE DER BEZUGSZEICHEN:

- 1: Atemschutzmaske
- 2: Maskenzuschnitt
- 3: Filtermedium
- 4: (erste) Filterschicht
- 5: (zweite) Filterschicht
- 6: (dritte) Filterschicht
- 7: äußere Abdecklage
- 8: Außenseite der Atemschutzmaske
- 9: innere Abdecklage
- 10: Innenseite der Atemschutzmaske
- 11: Maskenfalte
- 12: Oberer Maskenrand
- 13: Nasenbügel
- 14: Auflagestreifen
- 15: Seitlicher Maskenrand
- 16: Unterer Maskenrand
- 20: Befestigungsmittel
- 21: Befestigungsband
- 30: Salzschicht
- 31: (erste) Salzschicht
- 32: (zweite) Salzschicht
- 33: (dritte) Salzschicht
- 34: anorganisches Salz
- 35: Salzschichtdicke
- 40: Salzsolekapsel
- 41: wässrige Salzlösung
- 42: Kapselhülle
- 45: Zugangsöffnung

## Patentansprüche

1. Atemschutzmaske (1) zum Bedecken von Mund und Nase einer Person, umfassend einen mehrlagigen Maskenzuschnitt (2) mit einer Filterschicht eines Filtermediums (3), wobei die eine Filterschicht zwischen einer äußeren Abdecklage (7), welche (7) beim Tragen der Atemschutzmaske (1) eine vom Gesicht der Person abgewandte Außenseite (8) bildet, und einer inneren Abdecklage (9), welche (9) beim Tragen eine zum Gesicht der Person hin orientierte Innenseite (10) der Atemschutzmaske (1) bildet, angeordnet ist, wobei die Filterschicht zumindest abschnittsweise an ihren Oberflächen mit einer Salzschicht (30) beschichtet ist, sowie weiterhin umfassend Befestigungsmittel (20) zum Befestigen der Atemschutzmaske (1) am Kopf der Person, **dadurch gekennzeichnet, dass** zwei oder mehrere Filterschichten (4, 5, 6) eines Filtermediums (3) zwischen der äußeren (7) und der inneren (8) Abdecklage angeordnet sind, wobei jede der zwei oder mehreren Filterschichten (4, 5, 6) zumindest abschnittsweise mit einer Salzschicht (30) beschichtet ist, wobei die Salzschicht (30) aus zumindest einem anorganischen Salz (34), welches ein Natriumsalz enthält, gebildet ist, und wobei die Filterschichten (4, 5, 6) zumindest abschnittsweise miteinander sowie mit der äußeren (7) und der inneren (8) Abdecklage verbunden sind.

2. Atemschutzmaske (1) nach Anspruch 1, **dadurch gekennzeichnet, dass** zwei oder mehrere Filterschichten (4, 5, 6) aus unterschiedlichen Filtermedien hergestellt sind.

3. Atemschutzmaske (1) nach Anspruch 1 oder 2, **dadurch gekennzeichnet, dass** das anorganische Salz (34), welches die Salzschicht (30) bildet, Kochsalz ist.

4. Atemschutzmaske (1) nach einem der Ansprüche 1 bis 3, **dadurch gekennzeichnet, dass** die Salzschicht (30) zumindest ein weiteres Salz enthält, das ausgewählt ist aus der Gruppe bestehend aus: Kaliumsalz, Calciumsalz, Magnesiumsalz, Mangansalz.

5. Atemschutzmaske (1) nach einem der Ansprüche 1 bis 4, **dadurch gekennzeichnet, dass** die Salzschicht (30) ein Meersalz ist, welches vorzugsweise mehr als 97% Natriumchlorid, 0,5% Calciumsulfat, 0,3% Magnesiumchlorid, 0,2% Magnesiumsulfat und 0,1% Kaliumchlorid enthält.

6. Atemschutzmaske (1) nach einem der Ansprüche 1 bis 5, **dadurch gekennzeichnet, dass** die Salzschicht (30) auf den zwei oder mehreren Filterschichten (4, 5, 6) eine Schichtdicke (35) von 0,5 µm bis 10 µm, vorzugsweise von 1 µm bis 5 µm, aufweist.

7. Atemschutzmaske (1) nach einem der Ansprüche 1 bis 6, **dadurch gekennzeichnet, dass** die zwei oder mehreren Filterschichten (4, 5, 6) mit einer Salzschicht (30) mit einer Flächenbeladung von 10 g bis 300 g/m² Filtermedium, vorzugsweise von 50 g bis 250 g/m² Filtermedium, besonders bevorzugt von 100 g bis 200 g/m² Filtermedium, beschichtet sind.

8. Atemschutzmaske (1) nach einem der Ansprüche 1 bis 7, weiterhin umfassend zumindest eine Salzsolekapsel (40), **dadurch gekennzeichnet, dass** die zumindest eine Salzsolekapsel (40) eine wässrige Kochsalzlösung (41) mit mindestens 14 g gelöster Stoffe pro 1 kg Wasser enthält, die von einer Kapselhülle (42) umgeben ist, wobei die zumindest eine Salzsolekapsel (40) an der zumindest einen Filterschicht (4, 5, 6) zwischen der äußeren Abdecklage (7) und der inneren Abdecklage (9) befestigt ist.

9. Atemschutzmaske (1) nach Anspruch 8, **dadurch gekennzeichnet, dass** zwei oder mehrere Salzsolekapseln (40) zwischen der äußeren Abdecklage (7) und der inneren Abdecklage (9) innerhalb der Atemschutzmaske (1) angeordnet sind, wobei vorzugsweise die zwei oder mehreren Salzsolekapseln (40) über den Maskenzuschnitt (2) verteilt angeordnet sind.

10. Atemschutzmaske (1) nach Anspruch 8 oder 9, **dadurch gekennzeichnet, dass** die zumindest eine Salzsolekapsel (40) von 0,1 ml bis 10 ml einer wässrigen Kochsalzlösung (41) enthält.

11. Atemschutzmaske (1) nach einem der Ansprüche 8 bis 10, **dadurch gekennzeichnet, dass** die Kapselhülle (42) der zumindest einen Salzsolekapsel (40) durch äußere Krafteinwirkung (50) öffenbar ist, wobei die Kapselhülle (42) vorzugsweise aus Gelatine oder einem Gelatine-enthaltenden Material hergestellt ist.

12. Verfahren zum Beschichten von zwei oder mehreren Filterschichten (4, 5, 6) eines Filtermediums (3) einer Atemschutzmaske (1) mit einer Salzschicht (30), wobei das Verfahren die folgenden Schritte umfasst:
- Bereitstellen einer wässrigen anorganischen Salzlösung enthaltend ein Natriumsalz;
- Gleichmäßiges Aufbringen der wässrigen anorganischen Salzlösung auf den zwei oder mehreren Filterschichten (4, 5, 6) des Filtermediums (3);
- Trocknen der Filterschichten (4, 5, 6) unter Bildung einer Salzschicht (30) in kristalliner Form an der Oberfläche der Filterschichten (4, 5, 6);
- Zumindest abschnittsweises Verbinden der zwei oder mehreren mit Salzschichten (30) beschichteten Filterschichten (4, 5, 6) durch Vernähen oder Verkleben.

13. Verfahren nach Anspruch 12, **dadurch gekennzeichnet, dass** als Salzlösung eine Kochsalzlösung mit einer Salzkonzentration von 0,9% bis 35,9% verwendet wird.

14. Verfahren nach Anspruch 12 oder 13, **dadurch gekennzeichnet, dass** die Salzschicht (30) mittels Imprägnierung des Filtermediums (3) mit der Salzlösung aufgebracht wird, wobei die Filterschichten (4, 5, 6) zumindest einmal, vorzugsweise mehrmals, in der Salzlösung eingetaucht werden.

15. Verfahren nach Anspruch 12 oder 13, **dadurch gekennzeichnet, dass** die Salzschicht (30) mittels Aufsprühen der Salzlösung auf die Filterschichten (4, 5, 6) des Filtermediums (3) aufgebracht wird.

## Claims

1. Respiratory protective mask (1) for covering the mouth and nose of a person, comprising a multi-layer mask blank (2) with a filter layer of a filter medium (3), wherein the one filter layer is arranged between an outer covering layer (7), which (7) forms an outer side (8) facing away from the face of the person when the respiratory protective mask (1) is worn, and an inner cover layer (9), which (9) forms an inner side (10) of the respiratory protective mask (1) facing the face of the person when the respiratory protective mask (1) is worn, the filter layer being coated with a salt layer (30) at least in sections on its surfaces, and further comprising fastening means (20) for fastening the respiratory protective mask (1) to the head of the person, **characterized in that** two or more filter layers (4, 5, 6) of a filter medium (3) are arranged between the outer (7) and the inner (8) cover layer, each of the two or more filter layers (4, 5, 6) being coated at least in sections with a salt layer (30), the salt layer (30) being formed from at least one inorganic salt (34) which contains a sodium salt, and the filter layers (4, 5, 6) being connected at least in sections to one another and to the outer (7) and inner (8) cover layers.

2. Respiratory protective mask (1) according to claim 1, **characterized in that** two or more filter layers (4, 5, 6) are made of different filter media.

3. Respiratory protective mask (1) according to claim 1 or 2, **characterized in that** the inorganic salt (34) which forms the salt layer (30) is common salt.

4. Respiratory protective mask (1) according to one of claims 1 to 3, **characterized in that** the salt layer (30) contains at least one further salt selected from the group consisting of: Potassium salt, Calcium salt, Magnesium salt, Manganese salt.

5. Respiratory protective mask (1) according to one of claims 1 to 4, **characterized in that** the salt layer (30) is a sea salt which preferably contains more than 97% sodium chloride, 0.5% calcium sulfate, 0.3% magnesium chloride, 0.2% magnesium sulfate and 0.1% potassium chloride.

6. Respiratory protective mask (1) according to one of claims 1 to 5, **characterized in that** the salt layer (30) on the two or more filter layers (4, 5, 6) has a layer thickness (35) of from 0.5 µm to 10 µm, preferably from 1 µm to 5 µm.

7. Respiratory protective mask (1) according to any one of claims 1 to 6, **characterized in that** the two or more filter layers (4, 5, 6) are coated with a salt layer (30) having a surface loading of from 10 g to 300 g/m2 filter medium, preferably from 50 g to 250 g/m2 filter medium, particularly preferably from 100 g to 200 g/m2 filter medium.

8. Respiratory protective mask (1) according to any one of claims 1 to 7, further comprising at least one salt-sole capsule (40), **characterized in that** the at least one salt-sole capsule (40) contains an aqueous saline solution (41) with at least 14 g of dissolved substances per 1 kg of water, which is surrounded by a capsule shell (42), wherein the at least one salt-sole capsule (40) is attached to the at least one filter layer (4, 5, 6) between the outer cover layer (7) and the inner cover layer (9).

9. Respiratory protective mask (1) according to claim 8, **characterized in that** two or more salt-sole capsules (40) are arranged between the outer cover layer (7) and the inner cover layer (9) within the respiratory protective mask (1), preferably the two or more salt-sole capsules (40) being arranged distributed over the mask blank (2).

10. Respiratory protective mask (1) according to claim 8 or 9, **characterized in that** the at least one salt capsule (40) contains from 0.1 ml to 10 ml of an aqueous saline solution (41).

11. Respirator (1) according to any one of claims 8 to 10, **characterized in that** the capsule shell (42) of the at least one saline capsule (40) is openable by external force (50), the capsule shell (42) preferably being made of gelatin or a gelatin-containing material.

12. Method of coating two or more filter layers (4, 5, 6) of a filter medium (3) of a respirator mask (1) with a salt layer (30), the method comprising the following steps:
- Providing an aqueous inorganic salt solution containing a sodium salt;
- Uniformly applying the aqueous inorganic salt solution to the two or more filter layers (4, 5, 6) of the filter medium (3);
- Drying the filter layers (4, 5, 6) to form a salt layer (30) in crystalline form on the surface of the filter layers (4, 5, 6);
- Connecting, at least in sections, the two or more filter layers (4, 5, 6) coated with salt layers (30) by sewing or gluing.

13. Method according to claim 12, **characterized in that** a saline solution with a salt concentration of 0.9% to 35.9% is used as the salt solution.

14. Method according to claim 12 or 13, **characterized in that** the salt layer (30) is applied by means of impregnation of the filter medium (3) with the salt solution, the filter layers (4, 5, 6) being immersed in the salt solution at least once, preferably several times.

15. Method according to claim 12 or 13, **characterized in that** the salt layer (30) is applied to the filter layers (4, 5, 6) of the filter medium (3) by means of spraying on the salt solution.

## Revendications

1. Masque de protection respiratoire (1) pour couvrir la bouche et le nez d'une personne, comprenant une découpe de masque (2) à plusieurs couches avec une couche filtrante d'un milieu filtrant (3), l'une des couches filtrantes étant disposée entre une couche de recouvrement extérieure (7), laquelle (7) forme, lorsque le masque de protection respiratoire (1) est porté, un côté extérieur (8) détourné du visage de la personne, et une couche de recouvrement intérieure (9), laquelle (9) forme, lors du port, un côté intérieur (10) du masque de protection respiratoire (1) orienté vers le visage de la personne, la couche filtrante étant revêtue, au moins par sections, d'une couche de sel (30) sur ses surfaces, et comprenant en outre des moyens de fixation (20) pour fixer le masque de protection respiratoire (1) sur la tête de la personne, **caractérisé en ce que** deux ou plusieurs couches filtrantes (4, 5, 6) d'un milieu filtrant (3) sont disposées entre la couche de recouvrement extérieure (7) et la couche de recouvrement intérieure (8), chacune des deux ou plusieurs couches filtrantes (4, 5, 6) est revêtue au moins par sections d'une couche de sel (30), la couche de sel (30) étant formée d'au moins un sel inorganique (34) qui contient un sel de sodium, et les couches filtrantes (4, 5, 6) étant reliées au moins par sections entre elles ainsi qu'avec la couche de recouvrement extérieure (7) et la couche de recouvrement intérieure (8).

2. Masque de protection respiratoire (1) selon la revendication 1, **caractérisé en ce que** deux ou plusieurs couches filtrantes (4, 5, 6) sont fabriquées à partir de milieux filtrants différents.

3. Masque de protection respiratoire (1) selon la revendication 1 ou 2, **caractérisé en ce que** le sel inorganique (34) qui forme la couche de sel (30) est du sel de cuisine.

4. Masque de protection respiratoire (1) selon l'une des revendications 1 à 3, **caractérisé en ce que** la couche de sel (30) contient au moins un autre sel choisi dans le groupe constitué par : Sel de potassium, sel de calcium, sel de magnésium, sel de manganèse.

5. Masque de protection respiratoire (1) selon l'une des revendications 1 à 4, **caractérisé en ce que** la couche de sel (30) est un sel marin comprenant de préférence plus de 97% de chlorure de sodium, 0,5% de sulfate de calcium, 0,3% de chlorure de magnésium, 0,2% de sulfate de magnésium et 0,1% de chlorure de potassium.

6. Masque de protection respiratoire (1) selon l'une des revendications 1 à 5, **caractérisé en ce que** la couche de sel (30) sur les deux ou plusieurs couches filtrantes (4, 5, 6) présente une épaisseur de couche (35) de 0,5 µm à 10 µm, de préférence de 1 µm à 5 µm.

7. Masque de protection respiratoire (1) selon l'une des revendications 1 à 6, **caractérisé en ce que** les deux ou plusieurs couches filtrantes (4, 5, 6) sont revêtues d'une couche de sel (30) avec une charge surfacique de 10 g à 300 g/m2 de milieu filtrant, de préférence de 50 g à 250 g/m2 de milieu filtrant, de manière particulièrement préférée de 100 g à 200 g/m2 de milieu filtrant.

8. Masque de protection respiratoire (1) selon l'une quelconque des revendications 1 à 7, comprenant en outre au moins une capsule de sel (40), **caractérisé en ce que** ladite au moins une capsule de sel (40) contient une solution saline aqueuse (41) contenant au moins 14 g de substances dissoutes par kg d'eau et entourée d'une enveloppe de capsule (42), ladite au moins une capsule de sel (40) étant fixée à ladite au moins une couche filtrante (4, 5, 6) entre la couche de couverture extérieure (7) et la couche de couverture intérieure (9).

9. Masque de protection respiratoire (1) selon la revendication 8, **caractérisé en ce que** deux ou plusieurs capsules de sel (40) sont disposées entre la couche de recouvrement extérieure (7) et la couche de recouvrement intérieure (9) à l'intérieur du masque de protection respiratoire (1), les deux ou plusieurs capsules de sel (40) étant de préférence réparties sur la découpe de masque (2).

10. Masque de protection respiratoire (1) selon la revendication 8 ou 9, **caractérisé en ce que** la au moins une capsule de sel (40) contient de 0,1 ml à 10 ml d'une solution saline aqueuse (41).

11. Masque de protection respiratoire (1) selon l'une quelconque des revendications 8 à 10, **caractérisé en ce que** l'enveloppe de capsule (42) de ladite au moins une capsule de sel (40) peut être ouverte par l'application d'une force extérieure (50), ladite enveloppe de capsule (42) étant de préférence fabriquée en gélatine ou en un matériau contenant de la gélatine.

12. Procédé de revêtement de deux ou plusieurs couches filtrantes (4, 5, 6) d'un milieu filtrant (3) d'un masque respiratoire (1) avec une couche de sel (30), le procédé comprenant les étapes suivantes:
- Préparation d'une solution saline inorganique aqueuse contenant un sel de sodium ;
- Application uniforme de la solution saline inorganique aqueuse sur les deux ou plusieurs couches filtrantes (4, 5, 6) du milieu filtrant (3) ;
- Séchage des couches filtrantes (4, 5, 6) avec formation d'une couche de sel (30) sous forme cristalline à la surface des couches filtrantes (4, 5, 6) ;
- Liaison, au moins par sections, des deux ou plusieurs couches filtrantes (4, 5, 6) revêtues de couches de sel (30) par couture ou par collage.

13. Procédé selon la revendication 12, **caractérisé en ce qu'**on utilise comme solution saline une solution saline ayant une concentration en sel de 0,9% à 35,9%.

14. Procédé selon la revendication 12 ou 13, **caractérisé en ce que** la couche de sel (30) est appliquée par imprégnation du milieu filtrant (3) avec la solution saline, les couches filtrantes (4, 5, 6) étant immergées au moins une fois, de préférence plusieurs fois, dans la solution saline.

15. Procédé selon la revendication 12 ou 13, **caractérisé en ce que** la couche de sel (30) est appliquée sur les couches filtrantes (4, 5, 6) du milieu filtrant (3) par pulvérisation de la solution saline.
